Europäisches Patentamt

European Patent Office

Office européen des brevets

(11) Veröffentlichungsnummer: **0 407 868 A2**

# EUROPÄISCHE PATENTANMELDUNG

(21) Anmeldenummer: **90112726.6**

(22) Anmeldetag: **04.07.90**

(51) Int. Cl.⁵: **C07F 7/04, C08G 77/02**

(30) Priorität: **12.07.89 DE 3922880**

(43) Veröffentlichungstag der Anmeldung:
**16.01.91 Patentblatt 91/03**

(84) Benannte Vertragsstaaten:
**AT BE CH DE DK ES FR GB IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Block, Christian, Dr.**
**Domstrasse 41**
**D-5000 Köln 1(DE)**
Erfinder: **Krings, Petra**
**Elp 2**
**D-5657 Haan 1(DE)**

(54) Verfahren zur Herstellung von Polykieselsäure-C10-22-Alkylestern.

(57) Die Erfindung betrifft ein Verfahren zur Herstellung von Polykieselsäure-$C_{10-22}$-alkylestern aus Polykieselsäure/Tetrahydrofuran-Extrakten.

EP 0 407 868 A2

# VERFAHREN ZUR HERSTELLUNG VON POLYKIESELSÄURE-C$_{10-22}$-ALKYLESTERN

Die Erfindung betrifft ein Verfahren zur Herstellung von Polykieselsäurealkylestern durch Umsetzung von Polykieselsäure/Tetrahydrofuran-Extrakten mit C$_{10-22}$-Alkylalkoholen.

Ortho- und Polykieselsäureester sind Verbindungen in denen die Kohlenstoffatome organischer Gruppen über Sauerstoffbrücken mit Siliciumatomen verknüpft sind. Durch Variation der organischen Reste und des Vernetzungsgrades des Kieselsäureskeletts lassen sich Kieselsäureester mit nahezu beliebigen chemischen und anwendungstechnischen Eigenschaften herstellen.

Kieselsäureester, insbesondere Orthokieselsäureester sind beispielsweise durch Umsetzung von Chlorsilanen mit Alkoholen zugänglich (Winnacker-Küchler: "Chemische Technologie" 4. Auflage, Band 3, Seiten 93 bis 95, Carl Hanser Verlag, München/Wien 1983). Diese Herstellungsmethode erfordert jedoch einerseits eine aufwendige Technologie während der Chlorsilanherstellung, andererseits bildet sich bei der Veresterung Chlorwasserstoff, der durch aufwendige Adsorptionsverfahren beseitigt und/oder in den Produktionsprozeß zurückgeführt werden muß.

Eine weitere Methode zur Herstellung von Kieselsäurestern geht von Wasserglaslösungen aus (R. K. Iler, P. S. Pinkney in Industrial and Engineering Chemistry 39 , 1379 (1947)). Beim Ansäuern der Wasserglaslösungen bilden sich aus den Silikatanionen die freien Kieselsäuren. Aus den primär vorliegenden niedermolekularen und nicht isolierbaren Kieselsäuren entstehen durch Kondensation Polykieselsäuren, die ihrerseits zu sphärischen Kieselsäurepartikeln polymerisieren.

Da sich Polykieselsäuren nicht in wäßriger Lösung mit Alkoholen verestern lassen (US 3 351 561), müssen Polykieselsäuren vor der Veresterung aus der wäßrigen Lösung in ein geeignetes organisches Lösungsmittel transferiert werden. Diese Lösungsmittel müssen wasserlöslich oder mit Wasser mischbar und durch Elektrolytzusatz wieder aussalzbar sein. In den US-Patentschriften 2 383 653, 2 408 654 und 2 395 880 werden als Extraktionsmittel Alkohole, beispielsweise n-Propanol, i-Propanol, i-Butanol, t-Butanol und i-Pentanol; Ether, beispielsweise Polyethylenglykole; Ketone, beispielsweise Aceton; Amide beispielsweise N-Isobutylacetamid; Amine; Phosphorsäureester, beispielsweise Triethyl- und tributylphosphat sowie Phosphite, beispielsweise Tributylphosphit genannt. Die Extraktionsraten der aufgeführten Extraktionsmittel sowie die maximal erzielbare SiO$_2$-Konzentration in den Extraktionsmitteln sind sehr unterschiedlich. So können beispielsweise bei Verwendung von n-Propanol, i-Propanol und t-Butanol Extraktionsraten von etwa 70 % erzielt werden wobei der SiO$_2$-Gehalt in den Extrakten bei maximal 20 Gew.-% liegt. Es tritt jedoch bereits innerhalb kurzer Zeit Gelbildung ein. Bei der Zugabe von C$_{6-22}$-Alkylalkoholen zu Polykieselsäure/Propanol- und Polykieselsäure/Butanol-Extrakten sowie während der Veresterung bilden sich Ausfällungen unlöslicher hochpolymerer Kieselsäuren. Die genannten Lösungsmittel Propanol und Butanol stabilisieren daher die extrahierten Polykieselsäuren nur wenig gegen die in Konkurrenz zur Veresterung ablaufende Selbstkondensation der Silanolgruppen. Mit Polyethylenglykolen und Polypropylenglykolen als Extraktionsmittel werden Extraktionsraten bis zu 100 % erreicht, wobei der SiO$_2$-Gehalt der Polykieselsäureextrakte bis zu 30 Gew.-% betragen kann. Die erhaltenen Extrakte polymerisieren jedoch innerhalb weniger Stunden zu hochviskosen, zum Teil gummiartigen Produkten, die während der anschließenden Veresterung zu unlöslichen Polymeren erstarren.

Während der Umsetzung der extrahierten Polykieselsäuren mit Alkoholen zu den entsprechenden Polykieselsäureestern muß das gebildete Reaktionswasser durch beispielsweise azeotrope Destillation oder durch Zusatz wasserbindender Mittel aus dem Reaktionsgemisch entfernt werden. Bei dem in Industrial and Engineering Chemistry 39 , 1379 (1947) beschriebenen Verfahren wird mit t-Butanol extrahierte Polykieselsäure unter genauer Kontrolle von Druck und Reaktionstemperatur sowie Einhaltung einer bestimmten SiO$_2$-Konzentration mit n-Butanol verestert. Dieses Verfahren ist umständlich, führt in vielen Fällen zu unbrauchbaren polymeren Produkten und ist nur auf aliphatische Alkohole mit maximal 5 Kohlenstoffatomen anwendbar.

In US 2 801 185 wird die Veresterung der aus einem Kieselsäuresol mit Propanol extrahierten Kieselsäurepartikel mit einem verzweigten Octadecylalkohol beschrieben. Das erhaltene Produkt ist eine feste, nicht schmelzbare hochmolekulare hydrophobierte Polykieselsäure.

In Journal of Polymer Science, Polymer Chemistry Edition 22 , 3759 1984) wird die Veresterung von Kieselsäure/Tetrahydrofuran-Lösungen mit Methanol, Ethanol, Isopropanol, n-Butanol, t-Butanol und Octanol in einer Veresterungsapparatur mit zwei Kolben beschrieben. Zunächst wird aus dem sich im Reaktionskolben befindenden Gemisch aus Kieselsäure/Tetrahydrofuran-Lösung und Alkohol Tetrahydrofuran mittels Destillation entfernt. Anschließend wird die Veresterung bei Temperaturen von 63 °C und höher durchgeführt wobei das entstehende Alkohol/Wasser-Azeotrop in den zweiten Kolben zur Trocknung geleitet wird. Um das Volumen der Reaktionsmischung konstant zu halten, wird gleichzeitig getrockneter Alkohol aus dem zweiten Kolben wieder der Reaktionsmischung zugeführt.

Die Aufgabe der vorliegenden Erfindung bestand darin ein Verfahren zur Herstellung von Polykieselsäurealkylestern zu entwickeln, mit dem langkettige Alkylalkohole, d. h. Alkylalkohole mit 10 und mehr C-Atomen mit Polykieselsäuren in einfacher Weise verestert werden können. Die entstehenden Polykieselsäurealkylester sollen niedermolekular sein und sich in organischen Lösungsmitteln, beispielsweise Alkylalkoholen, vollständig lösen.

Überraschenderweise werden die an das zu entwickelnde Verfahren gestellten hohen Anforderungen erfüllt wenn Polykieselsäure/Tetrahydrofuran-Extrakte mit $C_{10-22}$-Alkylalkoholen unter Einhaltung bestimmter Molverhältnisse von Alkylalkoholen zu $SiO_2$ verestert werden, indem zunächst Tetrahydrofuran und anschließend bei höheren Temperaturen unter vermindertem Druck gebildetes Reaktionswasser destillativ entfernt werden.

Gegenstand der Erfindung ist somit ein Verfahren zur Herstellung von Polykieselsäurealkylestern durch Umsetzung von Polykieselsäure/Tetrahydrofuran-Extrakten mit Alkylalkoholen, welches dadurch gekennzeichnet ist, daß man

a) Polykieselsäure/Tetrahydrofuran-Extrakte mit $SiO_2$-Gehalten zwischen 2 und 50 Gew.-% mit $C_{10-22}$-Alkylalkoholen mischt, mit der Maßgabe, daß das Molverhältnis Alkylalkohole : $SiO_2$ zwischen 10 : 1 und 1,5 : 1 liegt,

b) anschließend Tetrahydrofuran bei Temperaturen zwischen 40 und 45 °C und Drucken zwischen $1 \cdot 10^4$ und $3 \cdot 10^4$ Pa abdestilliert

c) danach das Reaktionsgemisch auf Temperaturen zwischen 90 und 160 °C bei Drucken zwischen $7,5 \cdot 10^2$ und $22,5 \cdot 10^2$ Pa erhitzt und

d) das sich bildende Reaktionswasser kontinuierlich aus dem Reaktionsgemisch mittels Destillation entfernt.

Im Gegensatz zu den vielen aus dem Stand der Technik bekannten Verfahren zur Herstellung von Polykieselsäurealkylestern tritt bei dem erfindungsgemäßen Verfahren neben der Veresterung die Selbstkondensation der Silanolgruppen und damit die Polymerisation der Kieselsäuren nur in untergeordnetem Maße auf. Unter Einhaltung eines Molverhaltnisses Alkylalkohole : $SiO_2$ zwischen 10 : 1 und 1,5 : 1 bilden sich Polykieselsäurealkylester, die sich in organischen Lösungsmitteln und insbesondere in $C_{6-22}$-Alkylalkoholen hervorragend lösen. Werden Polykieselsäure/Tetrahydrofuran-Extrakte mit Alkylalkoholen in solchen Mengen gemischt, daß das Molverhältnis Alkohole : $SiO_2$ unterhalb 1,5 : 1 liegt, so bilden sich ausschließlich hochvernetzte, in $C_{6-22}$-Alkylalkoholen unlösliche Polykieselsäurealkylester. Des weiteren erfordert das erfindungsgemäße Verfahren keine komplizierte Reaktionsführung, wie beispielsweise bei dem in Journal of Polymer Science, Polymer Chemistry Edition 22 ,3759 (1984) beschriebenen Verfahren. Im Vergleich zu bekannten Verfahren sind die Reaktionszeiten deutlich kürzer.

Die für das erfindungsgemäße Verfahren als Edukte einzusetzenden Polykieselsäure/Tetrahydrofuran-Extrakte lassen sich in bekannter Weise herstellen, indem Alkaliwassergläser, wasserfreie und/oder wasserhaltige Metasilikate und/oder Schichtsilikate, beispielsweise Glimmer und/oder Smectite zu Mineralsäuren beispielsweise Schwefelsäure Salzsäure, Phosphorsäure und/oder Salpetersäure gegeben werden. Vorzugsweise werden handelsübliche wäßrige Natron- und/oder Kaliwasserglaslösungen mit Molverhältnissen Siliciumdioxid : Alkalioxid im Bereich zwischen 1 und 4 eingesetzt. Besonders reaktive Polykieselsäuren werden erhalten wenn der $SiO_2$-Gehalt der Wasserglaslösungen vor dem Ansäuern unterhalb 15 Gew.-%, vorzugsweise unterhalb 12 Gew.-% liegt. Die Wasserglaslösungen werden Mineralsäuren in solchen Mengen zugesetzt daß der pH-Wert immer zwischen 1 und 4, vorzugsweise zwischen 1 und 3,5 und besonders bevorzugt zwischen 1,5 und 2,5 liegt. Dabei bilden sich wasserklare Polykieselsäurelösungen, die bei den genannten pH-Werten erst nach etwa 20 Stunden zu Gelen erstarren.

Um die Polykieselsäuren aus der wäßrigen Phase in die organische Phase zu transferieren werden die wäßrigen Polykieselsäurelösungen mit Tetrahydrofuran versetzt und mit Alkalihalogeniden beispielsweise Natriumchlorid, gesättigt, wobei vorzugsweise zuerst Tetrahydrofuran und anschließend Alkalihalogenide zugegeben werden. Die für eine möglichst vollständige Extraktion erforderliche Tetrahydrofuranmenge bemißt sich nach der Polykieselsäuremenge -angegeben als $SiO_2$-Gehalt -, die aus der Polykieselsäurelösung extrahiert werden soll und der maximal möglichen Beladung des Tetrahydrofurans mit Polykieselsäure. Wenn die Extraktion der Polykieselsäure bei pH-Werten zwischen 1 und 4 durchgeführt wird, können 60 bis 95 % der in der wäßrigen Polykieselsäurelösung vorliegenden $SiO_2$-Menge in einem einzigen Extraktionsschritt in die organische Phase transferiert werden. Der Extrakionsgrad wird nach der Bestimmung der in der wäßrigen Phase verbliebenen $SiO_2$-Menge rechnerisch ermittelt. Die Kieselsäureextraktion wird bei Temperaturen zwischen 4 und 30 °C, vorzugsweise zwischen 15 und 30 °C und besonders bevorzugt zwischen 15 und 25 °C durchgeführt. Vor der Veresterung der Polykiesel-säuren werden die Po lykieselsäure/Tetrahydrofuran-Extrakte mit geglüh-tem Natriumsulfat, Magnesiumsulfat und/oder Calciumchlorid getrocknet.

Für das erfindungsgemäße Verfahren eignen sich Polykieselsäure/Tetrahydrofuran-Extrakte mit $SiO_2$-Gehalten zwischen 2 und 50 Gew.-%, und insbesondere Extrakte mit $SiO_2$-Gehalten zwischen 4 und 20 Gew.-%. Der Wassergehalt der Polykieselsäure/Tetrahydrofuran-Extrakte liegt vorzugsweise zwischen 5 und 20 Gew.-%. Besonders bevorzugt werden Polykieselsäure/Tetrahydrofuran-Extrakte eingesetzt die Polykieselsäuren enthalten deren Molmassenbereich sich nach 24 Stunden bei 25 °C von 500 bis 50 000 erstreckt (Gel-Permea-tionschromatographie: Ultrastyragelsäule mit Poly-styrolstandards geeicht, Dedektor: 410 32X RI der Firma Waters, Eluationsmittel: Tetrahydrofuran).

Die getrockneten Polykieselsäure/Tetrahydrofuran-Extrakte werden bei Temperaturen zwischen 10 und 30 °C mit $C_{10-22}$-Alkylalkoholen, die gewünschtenfalls in Tetrahydrofuran gelöst sind, gemischt, mit der Maßgabe, daß das Molverhältnis Alkylalkohole : $SiO_2$ zwischen 10 : 1 und 1,5 : 1, vorzugsweise zwischen 6 : 1 und 2 : 1 liegt. Anschließend wird Tetrahydrofuran bei Temperaturen zwischen 40 und 45 °C und Drücken zwischen $1 \cdot 10^4$ und $3 \cdot 10^4$ Pa abdestilliert, das tetrahydrofuranfreie Reaktionsgemisch auf Temperaturen zwischen 90 und 160 °C, vorzugsweise auf Temperaturen zwischen 110 und 140 °C bei Drücken zwischen $7,5 \cdot 10^2$ und $22,5 \cdot 10^2$ Pa erhitzt und das während der Veresterung gebildete Wasser kontinuierlich aus dem Reaktionsgemisch mittels Destillation entfernt. In Abhängigkeit von den Mengen der eingesetzten Polykieselsäure/Tetrahydrofuran-Extrakte und Alkylalkohole liegt die Reaktionszeit der Veresterung zwischen 2 und 8 Stunden.

Zur Veresterung von Polykieselsäuren eignen sich gerad- und/oder verzweigtkettige $C_{10-22}$-Alky-lalkohole natürlichen und/oder synthetischen Ursprungs, beispielsweise Decanol-1, Undecanol-1, Dodecanol-1, Tridecanol-1, Tetradecanol-1, Hexadecanol-1, Octadecanol-1, Eicosanol-1 und/oder Docosanol-1, ferner technische Alkoholgemische, beispielsweise Gemische mit überwiegend geradkettigen $C_{12-14}$ Alkylalkoholen, geradkettigen $C_{10-16}$-Alkylalkoholen und/oder geradkettigen $C_{12-18}$-Alkylalkoholen. Geringe Anteile ungesättig-ter Alkohole in technischen Alkoholgemischen haben keinen störenden Einfluß auf die Veresterung von Polykieselsäuren. Vorzugsweise werden gerad-kettige $C_{10-18}$-Alkylalkohole oder geradkettige $C_{10-18}$-Alkylalkoholgemische natürlichen Ur-sprungs eingesetzt.

Die erhaltenen Polykieselsäurealkylester und insbesondere die Polykieselsäureester mit $SiO_2$-Gehalten unterhalb 25 Gew.-% zeichnen sich durch hohe Lagerstabilitäten aus. Der mit Hilfe der Gel-Permeationschromatographie ermittelte Molmassenbereich, der nach dem erfindungsgemäßen Verfahren herstellbaren Polykieselsäurealkylester liegt zwischen $10^2$ und $10^7$, vorzugsweise zwischen $10^3$ und $10^6$.

Beispiele

1. Herstellung von Polykieselsäure/Tetrahydrofuran-Extrakten

777 g Natronwasserglaslösung (27,9 Gew.-% $SiO_2$ und 8,29 Gew.-% $Na_2O$; Gewichtsverhältnis $SiO_2 : Na_2O = 3,37$; Molverhältnis $SiO_2 : Na_2O = 3,47$) wurden mit 1138 g Wasser verdünnt und zu 1710 g einer 7,35 gew.-%igen wäßrigen Schwefelsäurelösung gegeben. In dieser Lösung wurden 3420 ml (3040 g) Tetrahydrofuran und anschließend 1200 g Natriumchlorid gelöst. Nach einstündigem Rühren bei 18 °C wurde die wäßrige Phase von der tetrahydrofuranhaltigen Phase in einem Scheidetrichter abgetrennt. Der erhaltene Polykieselsäure/Tetrahydrofuran-Extrakt wurde an-schließend über geglühtem Natriumsulfat getrock-net. Es wurden 3700 ml Polykieselsäure/Tetrahydrofuran-Extrakt mit einem $SiO_2$-Gehalt von 5 3 Gew.-% und einem Wassergehalt von 8 Gew.-% erhalten. Der Extraktionsgrad betrug 97 %. Der Molmassenbereich, bestimmt durch Gel-Permeationschromatographie (Säule: Ul-trastyragel, geeicht mit Polystyrolstandards, Dedek-tor:410 32X RI der Firma Waters, Eluationsmittel : Tetrahydrofuran), erstreckte sich nach 24 Stunden bei 25 °C von 500 bis 20 000.

2. Herstellung von Polykieselsäuredecylester

1070 g des gemäß Beispiel 1 hergestellten Polykieselsäure/Tetrahydrofuran-Extraktes wurden bei 18 °C unter Rühren mit 474 g (3 Mol) Decanol-1 gemischt. Tetrahydrofuran wurde am Rotavapor bei 40 bis 45 °C / $1 \cdot 10^4$ bis $3 \cdot 10^4$ Pa abdestilliert. Der erhaltene Rückstand wurde anschließend am Rotavapor auf 120 °C bei einem Druck von $10,5 \cdot 10^2$ Pa erhitzt und die Veresterung bei 120 °C/$10,5 \cdot 10^2$ Pa in drei Stunden durchgeführt. Das entstehende Reaktionswasser wurde kontinuierlich aus dem Reaktionsgemisch abdestilliert. Das heiße Reaktionsprodukt wurde über eine D3-Fritte filtriert.

Der erhaltene bei 20 °C flüssige leichtviskose Polykieselsäuredecylester wies einen $SiO_2$-Gehalt

von 10,04 Gew.-% auf. Der Molmassenbereich (Bestimmung gemäß Beispiel 1) erstreckte sich nach 24 Stunden bei 25 °C von $10^3$ bis $10^{5,1}$.

### 3. Herstellung von Polykieselsäuretetradecyleste r

1070 g des gemäß Beispiel 1 hergestellten Polykieselsäure/Tetrahydrofuran-Extraktes wurden bei 18 °C unter Rühren mit einer Lösung von 559 g Tetradecanol-1 (2,6 Mol) in 480 ml Tetrahydrofuran gemischt. Tetrahydrofuran wurde am Rotavapor bei 40 bis 45 °C / $1 \cdot 10^4$ bis $3 \cdot 10^4$ Pa abdestilliert. Anschließend wurde die Temperatur bei einem Druck von $10,5 \cdot 10^2$ Pa auf 125 bis 130 °C gesteigert und das sich bildende Reaktionswasser mittels Destillation kontinuierlich entfernt. Nach einer Reaktionszeit von drei Stunden wurde das heiße Produkt filtriert.

Der erhaltene, bei 20 °C feste weiß-gelbe Polykieselsäuretetradecylester mit einem $SiO_2$-Gehalt von 8,27 Gew.-% und einem Festpunkt von 24 bis 26 °C ließ sich zu einer klaren Flüssigkeit aufschmelzen. Der Molmassenbereich (Bestimmung gemäß Beispiel 1) erstreckte sich nach 24 Stunden bei 25 °C von $10^{3,1}$ bis $10^5$.

### 4. Herstellung von Polykieselsäurehexadecylester

1070 g des gemäß Beispiel 1 hergestellten Polykieselsäure/Tetrahydrofuran-Extraktes wurden bei 18 °C unter Rühren mit einer Lösung von 630 g Hexadecanol-1 (2,6 Mol) in 800 ml Tetrahydrofuran gemischt. Tetrahydrofuran wurde am Rotavapor bei 40 bis 45 °C / $1 \cdot 10^4$ bis $3 \cdot 10^4$ Pa abdestilliert. Anschließend wurde auf 125 bis 130 °C bei einem Druck von $10,5 \cdot 10^2$ Pa erhitzt und das sich während der Veresterung bildende Wasser kontinuierlich aus dem Reaktionsgemisch abdestilliert. Nach einer Reaktionszeit von drei Stunden wurde das heiße Reaktionsgemisch zur Abtrennung geringer $SiO_2$-Ausfällungen filtriert.

Der erhaltene, bei 20 °C feste fast weiße Polykieselsäurehexadecylester mit einem $SiO_2$-Gehalt von 6,46 Gew.-% und einem Festpunkt von 51 bis 54 °C ließ sich zu einer klaren Flüssigkeit aufschmelzen. Der Molmassenbereich (Bestimmung gemäß Beispiel 1) erstreckte sich nach 24 Stunden bei 25 °C von $10^{3,2}$ bis $10^5$.

### Ansprüche

1. Verfahren zur Herstellung von Polykieselsäurealkylestern durch Umsetzung von Polykieselsäure/Tetrahydrofuran-Extrakten mit Alkylalkoholen dadurch gekennzeichnet daß man

a) Polykieselsäure/Tetrahydrofuran-Extrakte mit $SiO_2$-Gehalten zwischen 2 und 50 Gew.-% mit $C_{10-22}$-Alkylalkoholen mischt, mit der Maßgabe, daß das Molverhältnis Alkylalkohole zu $SiO_2$ zwischen 10 : 1 und 1,5 : 1 liegt,

b) anschließend Tetrahydofuran bei Temperaturen zwischen 40 und 45 °C und Drücken zwischen $1 \cdot 10^4$ und $3 \cdot 10^4$ Pa abdestilliert,

c) danach das Reaktionsgemisch auf Temperaturen zwischen 90 und 160 °C bei Drucken zwischen $7,5 \cdot 10^2$ und $22,5 \cdot 10^2$ Pa erhitzt und

d) das sich bildende Reaktionswasser kontinuierlich aus dem Reaktionsgemisch mittels Destillation entfernt.

2. Verfahren nach Anspruch 1, dadurch gekennzeichnet daß man Polykieselsäure/Tetrahydrofuran-Extrakte mit $SiO_2$-Gehalten zwischen 4 und 20 Gew.-% und Wassergehalten zwischen 5 und 20 Gew.-% einsetzt.

3. Verfahren nach einem oder beiden der Ansprüche 1 bis 2, dadurch gekennzeichnet, daß man Polykieselsäure/Tetrahydrofuran-Extrakte einsetzt, die Polykieselsäuren enthalten, deren Molmassenbereiche sich nach 24 Stunden bei 25 °C von 500 bis 50 000 erstrecken.

4. Verfahren nach einem oder mehreren der Ansprüche 1 bis 3, dadurch gekennzeichnet, daß das Molverhältnis Alkylalkohole zu $SiO_2$ zwischen 6 : 1 und 2 : 1 liegt.

5. Verfahren nach einem oder mehreren der Ansprüche 1 bis 4, dadurch gekennzeichnet, daß man geradkettige Alkylalkohole mit 10 bis 18 C-Atomen einsetzt.

6. Verfahren nach einem oder mehreren der Ansprüche 1 bis 5, dadurch gekennzeichnet, daß man das tetrahydrofuran-freie Reaktionsgemisch auf Temperaturen zwischen 110 und 140 °C bei Drucken zwischen $7,5 \cdot 10^2$ und $22,5 \cdot 10^2$ Pa erhitzt.